# EUROPÄISCHE PATENTANMELDUNG

(11) **EP 1 047 028 A1**
(43) Veröffentlichungstag der Anmeldung: **25.10.2000**
(21) Anmeldenummer: 99107726.4
(22) Anmeldetag: 19.04.1999
(51) Int. Cl.: G07F 7/08, G07F 7/10, G07F 19/00

(54) **Kommunikationssytem und Verfahren zur effizienten Durchführung von elektronischen Transaktionen in mobilen Kommunikationsnetzen**

(71) Anmelder: TELEFONAKTIEBOLAGET LM ERICSSON (publ), 126 25 Stockholm (SE)
(72) Erfinder: Wrona, Konrad, 52074 Aachen (DE); Zavagli, Guido, 52062 Aachen (DE)
(74) Vertreter: Mohsler, Gabriele

(57) **Zusammenfassung**

Die Erfindung betrifft ein Kommunikationssystem, ein Verfahren und Vorrichtungen zu einer effizienten Durchführung von elektronischen Transaktionen zwischen einem mobilen Teilnehmer in einem mobilen Kommunikationsnetz und einer Netzvorrichtung unter Ausnutzung von kreditkarten-basierten Bezahlungsprotokollen. Das Protokoll, das zur Realisierung einer sicheren elektronischen Transaktion, wie beispielsweise das SET™, herangezogen wird, ist über eine Vielzahl von involvierten Kommunikationseinheiten verteilt. Für die Realisierung der Erfindung wird der Teil des Protokolls, der normalerweise in der mobilen Station eines Benutzers enthalten ist in zwei Teile aufgeteilt. Der erste Teil, der die privaten Daten eines Teilnehmers, wie beispielsweise der privaten Schlüssel oder die Zertifikate, bleibt in der mobilen Station enthalten. Der zweite Teil der Software wird in einen Server, der zwischen der mobilen Station und dem Händler lokalisiert ist, verschoben. Auf diese Weise gewährleistet die Erfindung einerseits die Möglichkeit der Integration von aufwendigen Software für eine elektronische Form der Bezahlung in einem Netz, das durch geringe Übertragungskapazität und Endgeräte die eine nicht ausreichende Speicherkapazität aufweisen, charakterisiert ist und anderseits die Beibehaltung der Sicherheitsaspekte auf der Seite des Benutzers. Zusätzlich erzielt die Erfindung die Gewährleistung der Kompatibilität mit der bereits vorhanden Software.

## Beschreibung

Die Erfindung betrifft ein Kommunikationssystem, ein Verfahren und Vorrichtungen zu einer effizienten Durchführung von elektronischen Transaktionen zwischen einem mobilen Teilnehmer in einem mobilen Kommunikationsnetz und einer Netzvorrichtung unter Ausnutzung von kreditkarten-basierten Bezahlungsprotokollen.

Unter den verschiedenen kommerziellen Diensten die einem Internet Benutzer zur Verfügung gestellt werden, gehört beispielsweise die Möglichkeit der elektronischen Warenkäufe. Im Netz bieten Firmen ihre Waren in Form von elektronischen Katalogen an, in denen ein Benutzer durch einen Mausklick aus einer Produktpalette Waren aussuchen, bestellen und erwerben kann. Der An- und Verkauf von Waren, Diensten und Informationen im Internet ist unter den Namen elektronischer Handel oder das sogenannte "electronic commerce" zusammengefasst. Eine Anforderung, die dabei an das zugrundeliegende Netz gestellt wird, ist die Gewährleistung einer sicheren Durchführung von elektronischen Geldtransaktionen. Die Sicherheit erweist sich als besonders unerlässlich aufgrund der Tatsache, daß die Abwicklung eines Bezahlungsvorganges auf dem elektronischen Wege erfolgt.

Zu diesem Zweck wurde eine Vielzahl von Protokollen entwickelt, die für die Realisierung einer elektronischen Bezahlungsprozedur herangezogen werden können, beispielsweise Cyber-Cash, First Virtual und Secure Electronic Transaktion (SET). Das charakteristische für die Protokolle ist, daß diese für eine kreditkarte-basierte Bezahlung entwickelt worden sind und entsprechend die mit dieser Form der Bezahlung verbundenen Sicherheitsanforderungen erfüllen. Im folgenden wird für die Erläuterung der Erfindung als Beispiel das Secure Electronic Transaktion SET™, SET™ Spezifikation Version 1.0, datiert mit 5/31/97, herangezogen.

Die Protokolle zur Durchführung einer elektronischen Bezahlungsprozedur insbesondere über eine Kreditkarte wurden für ein Festnetz entwickelt, das über eine ausreichende Übertragungskapazität und eine ausreichende Speicherkapazität in den Endeinrichtungen verfügt. Diese Anforderungen erfüllt beispielsweise eine Netzarchitektur, in der ein Internet Benutzer mit einem Personal Computer über eine feste Leitung mit dem Internet verbunden ist. Diese Anforderungen sind jedoch nicht gegeben, wenn ein Benutzer aus einem mobilen Kommunikationsnetz eine elektronische Transaktion durchführt. Ein mobiles Kommunikationsnetz ist durch eine niedrige Übertragungskapazität und Endgeräte, die eine kleine Speicherkapazität aufweisen charakterisiert. Die im mobilen Netz verwendeten Endgeräte sind entweder mobile Telefone oder Geräte, die in sich eine integrierte Funktion von sowohl einem mobilen Telefon als auch die Funktion eines Computers, die sogenannte PDA (Portable Digital Assistent) aufweisen. Die Größe dieser Geräte wird aufgrund der Mobilität eines Benutzers minimal gehalten. Dies ruft lediglich die Notwendigkeit der Reduzierung der Speicherkapazität hervor und führt dazu, daß diese Geräte nicht über ausreichende Speicherkapazität verfügen, um beispielsweise das aufwendige Secure Electronic Transaktion (SET) Protokoll zu installieren. In ServerWallet von Netlife, das unter http://www.netlife.de/ veröffentlicht ist, ist eine Lösung vorgeschlagen, in der eine Verschiebung des ganzen Secure Electronic Transaktion (SET) Protokolls zu einem speziell, für diese Zwecke eingerichteten Server, durchgeführt wird. Gemäß dieser Veröffentlichung ist der Server zwischen einem Benutzer und einem Warenanbieter lokalisiert. Der Nachteil dieser Lösung ist jedoch, daß ein Benutzer über keine Kontrolle bezüglich der Sicherheitsaspekte verfügt. Die Initiierung einer Transaktion wird von einem Benutzer eingeleitet und an den Server weitergereicht. Dieser verfügt über die gesamte Software des Bezahlungsprotokolls mit allen zugehörigen Daten, ebenfalls über die persönlichen Daten des Benutzers, anhand deren die initiierte Transaktion vollständig aus dem Server hervor durchgeführt wird. Insbesondere bedeutet dies, daß die Kontrolle und die Steuerung der ausführbaren elektronischen Transaktion vollständig der Zuständigkeit des Servers unterliegt.

Demgemäß ist es die Aufgabe der vorliegenden Erfindung eine Methode und eine Vorrichtung zu schaffen, die eine effiziente Durchführung von sicheren Bezahlungstransaktionen in einem Netz gewährleistet. Insbesondere ist es die Aufgabe der Erfindung eine Reduzierung des Speicherbedarfs auf der Seite eines Benutzers zu erzielen.

Dies wird erfindungsgemäß gelöst durch die Lehre des Patentanspruches 1, durch die Lehre des Patentanspruches 19 und durch die Lehre der Patentansprüche 24 und 26.

Vorteilhaft erweist sich hierbei, daß durch die Verschiebung eines Teils der Software in den Server weniger Transaktion über die Luftschnittstelle durchgeführt werden und dadurch die Leistung der gesamten Bezahlungsprozedur über ein mobiles Netz verbessert wird. Aus diesem Grund erweist sich als vorteilhaft, daß die Ressourcen der Luftschnittstelle besser genutzt werden.

Ein weiterer Vorteil erweist sich in einer minimalen Ausnutzung der zur Verfügung stehenden Speicherkapazität in Endgeräten. Dies wird erzielt, in dem in einem Endgerät nur die privaten Daten eines Benutzers abgespeichert werden.

Vorteilhaft erweist sich hierbei auch, daß die Erfindung auf der standardisierten Software basiert. Aus diesem Grund ist die Kompatibilität mit der vorhandenen Software gewährleistet und auf diese Weise wird eine Transparenz der Durchführung einer Transaktion für den Händler erreicht, das bedeutet der Händler bekommt nicht mit, ob es sich um einen mobilen Benutzer oder einen Benutzer, der direkt an ein festes Netz angeschlossen ist handelt.

Weitere vorteilhafte Ausgestaltung der Erfindung ergibt sich aus den Ansprüchen 2 bis 19, 20 bis 23 und der Patentanspruch 25.

Im folgenden wird die Erfindung anhand von Ausführungsbeispielen und Figuren näher erläutert.

Folgende Figuren zeigen:
- Fig. 1:: Schematische Darstellung der Erfindung,
- Fig.2:: Darstellung einer asymmetrischen Verschlüsselung,
- Fig.3:: Schema einer Authentizierung,
- Fig.4:: Schema einer Doppelunterschrift,
- Fig.5:: Netzarchitektur mit der logischen Darstellung der verwendeten Protokollen,
- Fig.6:: Informationsfluss während eines Zahlungsvorgangs.

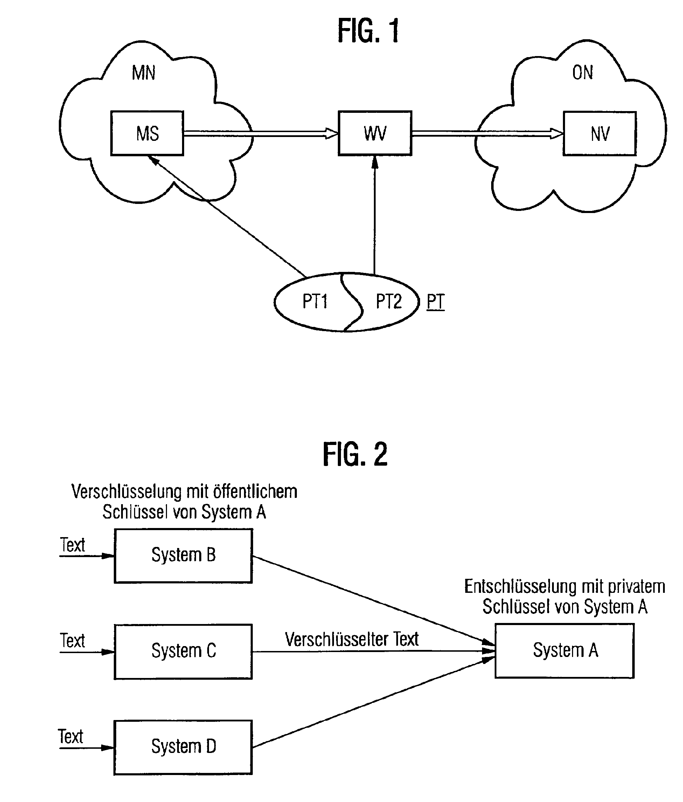

Im folgenden wird die Erfindung anhand des Patentanspruches 1 und Figur 1 näher erläutert.

Gemäß der Erfindung erfolgt eine Aufteilung eines Protokolls PT für die Durchführung von sicheren elektronischen Transaktionen zwischen einer mobilen Station MS in einem mobilen Kommunikationsnetz MN, und einer weiteren Vorrichtung WV, die zwischen der mobilen Station MS und einer Netzwerkvorrichtung in einem offenen Netz ON lokalisiert ist. Die Aufteilung der Funktionalität des Protokolls PT erfolgt in einen ersten Teil PT1 und in einen weiteren Teil PT2. Mit dem Protokoll PT wird die Durchführung einer elektronischen Transaktion zwischen der mobilen Station MS und der Netzwerkvorrichtung NV über die weitere Vorrichtung WV realisiert.

Bei der Aufteilung des Protokolls für die Durchführung von sicheren elektronischen Transaktionen wird darauf geachtet, daß die mobile Vorrichtung die privaten Daten der Benutzer erhält und die Verwaltung der allgemein zugänglichen Daten, wie beispielsweise der öffentliche Schlüssel oder die Zertifikate von einer weiteren Vorrichtung übernommen wird. Auf diese Weise wird die Durchführung der gesamten Transaktion von dem Benutzer kontrolliert, denn die Transaktion wird von dem Benutzer der mobilen Station aus initiiert, diese führt das Signaturprozess aufgrund der vorliegenden persönlichen Daten durch und auf der Seite der mobilen Station liegt die Kontrolle der Ergebnisse der abgewickelten Transaktion. Die Abwicklung der restlichen Prozessen mit der Netzwerkvorrichtung, die mit Bestellung und Zahlungsanweisungen zusammenhängen, erfolgt unter der Steuerung der weiteren Vorrichtung. In diesem Zusammenhang erfolgt in der weiteren Vorrichtung die Erfüllung der komplexen Sicherheitsaspekten, wie beispielsweise die Bildung der Dualsignatur.

Im folgenden wird anhand des Secure Electronic Transaktion Protokolls SET™ die Erfindung näher erläutert.

Das Secure Electronic Transaktion (SET) Protokoll ist ein komplexes Protokoll, das mit dem Einsatz von ausgeprägten kryptographischen Techniken eine sichere Bezahlung über Kreditkarten in einem offenen Netz, wie beispielsweise das Internet sicherstellt. Bei einer Bezahlung werden im Netz Signalisierungsnachrichten ausgetauscht. Diese Nachrichten werden verschlüsselt übertragen. Der Zweck der Verschlüsselung ist den Inhalt der übertragenen Nachricht von einem unauthorisierten Zugriff zu schützen, um auf diese Weise die Vertraulichkeit der Transaktion zu gewährleisten. Beim Sender werden die Daten mit einer geheimen Information, dem sogenannten Schlüssel verschlüsselt und bei dem Empfänger unter der Verwendung eines weiteren Schlüssels wieder entschlüsselt. Hierbei ist es nicht notwendig, daß beide Schlüsseln gleich sind, dies variiert in Abhängigkeit von dem verwendeten kryptographischen Verfahren. Beispielsweise das sogenannte asymmetrische Verschlüsselungsverfahren benutzt zwei Arten von Schlüsseln. Bei dieser Methode gibt es einen öffentlichen Schlüssel, der allgemein zugänglich ist und einen privaten Schlüssel, der ausschließlich einer Kommunikationsinstanz bekannt ist. Ein Schlüssel wird zur Verschlüsselung und der andere zur Entschlüsselung verwendet. Hierbei gilt, daß die beiden Schlüssel in einer Relation zueinander stehen müssen, so daß eine mit einem Schlüssel verschlüsselte Nachricht nur mit dem anderen wieder entschlüsselt werden kann. Im allgemeinen wird bei der Methode der asymmetrischen Verschlüsselung der öffentliche Schlüssel von einem Sender benutzt, um eine Nachricht an einem Empfänger zu verschlüsseln. Die Entschlüsselung erfolgt mit dem Einsatz des privaten Schlüssels des Empfängers.

Dieser Sachverhalt ist in Figur 2 näher erläutert. Es stellt drei Systeme dar, System B, System C, System D, die einen Text an das System A verschlüsselt verschicken wollen. Gemäß Figur 2 wird zu Verschlüsselung des Textes der öffentliche Schlüssel des Systems A eingesetzt. Der öffentliche Schlüssel von einer Einheit ist allgemein bekannt und für jedes System zugänglich. Der verschlüsselte Text wird zum System A übertragen. Das System A verfügt über den privaten Schlüssel von A, mit dem der empfangene Text entschlüsselt wird.

Außer der asymmetrischen Verschlüsselung gibt es zusätzlich das symmetrische Verschlüsselungsverfahren. Bei diesem Verfahren verfügen beide kommunizierende Einrichtungen über den gleichen Schlüssel. Dies veranlasst, daß eine Nachricht mit dem gleichen Schlüssel bei einem Sender verschlüsselt, wie diese bei einem Empfänger wieder entschlüsselt wird.

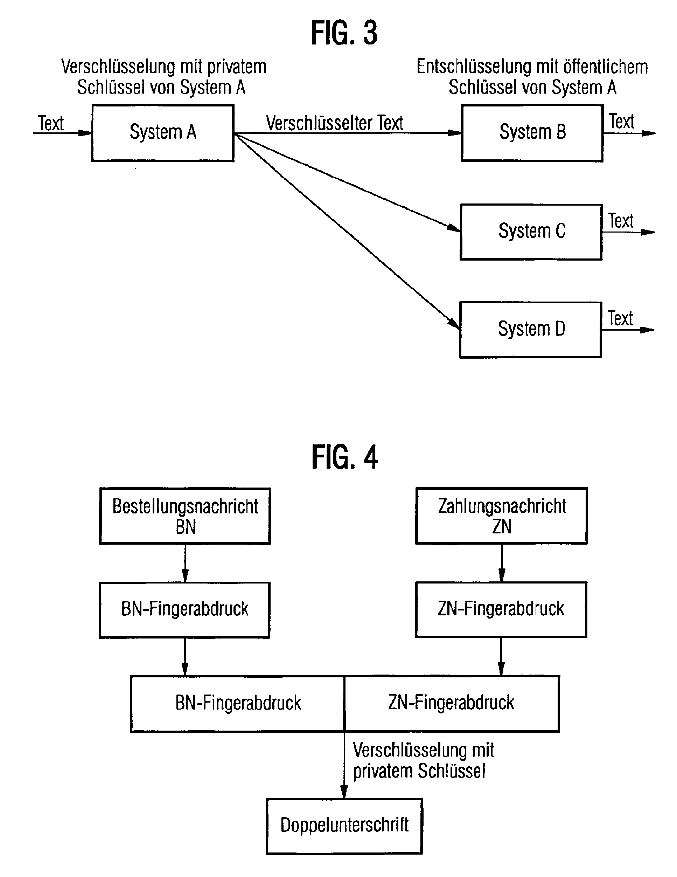

Außer der Verschlüsselung von auszuführenden Nachrichten, führt dieses ebenfalls eine Authentizierung der kommunizierenden Einrichtungen durch. Die Authentizierung regelt die Kontrolle über die Zugriffsrechte. Hiermit wird sichergestellt, daß auf bestimmte Daten nur von dem Personenkreis zugegriffen werden kann, der hierfür authorisiert worden ist. In diesem Zusammenhang ist es notwendig die Identität der kommunizierenden Einrichtungen zu verifizieren. Eine Vielzahl von unterschiedlichen Authentizierungsverfahren kann verwendet werden. Die bekannteste Methode, die besonders ausgereifte Sicherheitsanforderungen erfüllt, ist unter den Namen "starke Authentizierung" bekannt. Die "starke Authentizierung" funktioniert nach dem Prinzip des asymmetrischen Verschlüsselungsverfahrens. Wobei im Gegensatz zu der Verschlüsselung wird bei der Authentizierung der öffentliche Schlüssel zu der Entschlüsselung einer mit einem privaten Schlüssel verschlüsselten Nachricht verwendet. Dieser Sachverhalt ist in Figur 3 dargestellt. Gemäß Figur 3 verschlüsselt der Sender, System A einen Text mit seinem privaten Schlüssel, in Figur 3 als privater Schlüssel von System A bezeichnet und verschickt diesen an die Systeme B, C und D. Diese entschlüsseln die empfangene Nachricht mit dem öffentlichen Schlüssel des Systems A.

Mit dieser Methode ist jede Vorrichtung in der Lage die Nachricht zu entschlüsseln, da der öffentliche Schlüssel des Senders, der zur Entschlüsselung verwendet wird, allgemein bekannt ist. Auf diese Weise wird erreicht, daß ein Teilnehmer in der Lage ist, sich vor jedem System zu authentizieren. Die Systeme ordnen die Authentizierung als erfolgreich an, weil die Nachricht nur auf der Sender Seite mit dem privaten Schlüssel verschlüsselt werden konnte. Dies ist darauf zurückzuführen, daß ausschließlich diese Seite den privaten Schlüssel kennt.

Die Methode der "starken Authentizierung" wird bei einer digitalen Signatur eingesetzt. Die digitale Signatur wird zur Feststellung der Echtheit von elektronisch übermittelten Nachrichten verwendet und ist die elektronische Äquivalenz zur handschriftlichen Unterschrift. Durch Überprüfung der digitalen Signatur lässt sich feststellen, ob die zugehörige Nachricht verändert wurde. Eine digitale Signatur hat die Eigenschaft, daß sie nur von einer einzigen Person korrekt erzeugt, aber von allen Empfängern der Nachricht überprüft werden kann. Hierfür eignen sich die asymmetrischen Verschlüsselungsverfahren. Es wird allerdings nicht das ganze Dokument aufgrund der langen Rechenzeiten verschlüsselt, sondern es wird aus dem Dokument ein sogenannter kryptographischer Fingerabdruck berechnet, der verschlüsselt dem Dokument beigefügt wird. Der verschlüsselte kryptographischer Fingerabdruck entspricht der digitalen Unterschrift. Ein Empfänger erlangt die Gewißheit, daß die empfangene Nachricht tatsächlich von dem Sender stammt, in dem er einen Kontrollfingerabdruck aus dem empfangenen Dokument erstellt und diesen mit dem unter dem Einsatz eines öffentlichen Schlüssels entschlüsselten Fingerabdruck des Senders vergleicht.

Aufgrund der geforderten Sicherheit verwendet Secure Electronic Transaktion (SET) eine erweiterte Form der Digitalsignatur, die sogenannte Dualsignatur oder Doppelunterschrift. Die Dualsignatur erlaubt, daß zwei getrennte Nachrichten mit einer gemeinsamen Unterschrift so zu verbinden, daß sie aus dem Zusammenhang nicht dekodiert werden können. In Figur 4 ist das Schema der Doppelunterschrift dargestellt. Aus der Bestellungsnachricht BN und Zahlungsnachrichten ZN werden zwei kryptographische Fingerabdrücke, BN-Fingerabdruck und ZN-Fingerabdruck gebildet und einander gehängt. Aus dieser Verkettung wird ein neuer Fingerabdruck gebildet und mit dem privaten Schlüssel des Senders verschlüsselt. Auf diese Weise entsteht die Doppelunterschrift von Bestellungsnachricht BN und Zahlungsnachricht ZN.

Bei der Bildung der Fingerabdrücke wird für jeden Fingerabdruck ein anderer Wert verwendet. Diese Werte werden in der Anfangsphase der Kommunikation mit den entsprechenden Empfängern einer Nachricht vereinbart, so daß ein Empfänger nur den Teil der Nachricht entschlüsseln kann, der ausschließlich an ihn gerichtet ist. Dieser Empfänger hat zwar Zugang zu dem Fingerabdruck der anderen Nachricht, kann aber den tatsächlichen Inhalt dieser Nachricht nicht entschlüsseln ohne den zugehörigen Wert, der zur Bildung des Fingerabdrucks benutzt wurde zu kennen. Auf diese Weise erlangen die in eine Kommunikation involvierte Einrichtungen die Gewissheit, daß die verschickten Nachrichten in einem Zusammenhang zueinander stehen, ohne tatsächlich Zugang zu den in einer Nachricht enthaltenen Informationen zu haben. Bei Secure Electronic Transaktion (SET) wird mit der Doppelunterschrift beispielsweise erreicht, daß ein Händler keine Informationen bezüglich der Bezahlung, beispielsweise die Nummer der Kreditkarte erfährt und daß die Bank im Gegenzug keine Informationen über die getätigte Bestellung erhält. Beide Einrichtungen erlangen aber mit dieser Methode die Sicherheit, daß die durchzuführende Vorgänge miteinander zusammenhängen.

Das Problem, das sich bei den kryptographischen Verfahren ergibt ist die Verteilung der Schlüssel an die Kommunikationspartner. Es muß von dem zugrundeliegenden System sichergestellt werden, daß einem Kommunikationspartner ein öffentlicher Schlüssel zugesendet wird, der garantiert dem anderen Kommunikationspartner zugeordnet ist. Dies wird beispielsweise mit dem Einsatz von den sogenannten Zertifikaten erreicht. Eine zentrale Einrichtung, die sogenannte Zertifizierungsstelle, verfügt über die Informationen bezüglich der wahren Identität einer Person und ihres öffentlichen Schlüssels. Auf Anforderung versendet diese Einrichtung den öffentlichen Schlüssel an den Kommunikationspartner. Die Übertragung des Schlüssels erfolgt in verschlüsselter Form. Die Zertifizierungsstelle verschlüsselt den öffentlichen Schlüssel eines Teilnehmers mit dem eigenen privaten Schlüssel. Diese Nachricht wird beim Empfänger mit dem Einsatz des öffentlichen Schlüssels der Zertifizierungsstelle entschlüsselt.

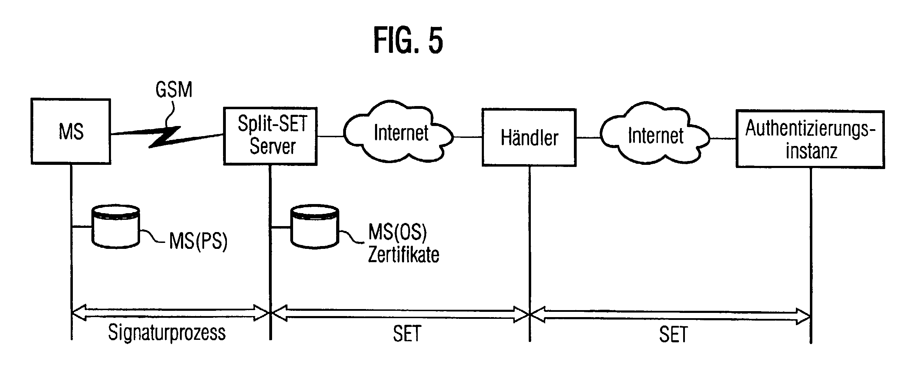

Im folgenden wird anhand der Figur 5 die Erfindung näher erläutert. Hierbei wird schematisch die Durchführung einer Transaktion zwischen einem mobilen Teilnehmer, beispielsweise zwischen einer mobilen Station MS und einem im Internet eingegliederten Finanzinstitut des Händlers gezeigt. Die Überprüfung der Identität eines Benutzers für die Banken wird in einigen Ländern von einer zentralen Vorrichtung im folgenden als Authentizierungsinstanz genannt, durchgeführt. In Deutschland wird die Aufgabe der Authentizierungsinstanz beispielsweise von der Gesellschaft für Zahlungssysteme (GZS) erfüllt. In bestimmten Ländern werden jedoch die Aufgaben einer Authentizierungsinstanz von einer Bank übernommen.

Der obere Teil der Figur 5 zeigt die physikalische Verbindung mit den entsprechenden Kommunikationseinheiten, und der untere Teil stellt die logische Verbindung mit den involvierten Protokollen dar. Die mobile Station MS kann beispielsweise ein Laptop Computer sein, der über ein Kartenlesegerät verfügt. Der Laptop ist über eine Terminal Adaptation Funktion (TAF), deren Aufgabe beispielsweise die PCMCIA-Karte (Personal Computer Memory Card International Association) erfüllt, mit einem mobilen Telefon verbunden. Die mobile Station MS kommuniziert mit einem sogenannten Split-SET Server. Für die Realisierung der Erfindung wird diese zusätzliche Endeinrichtung eingeführt. Das Lokalisieren des Split-SET Servers erfolgt entweder im GSM (Global System for Mobile Communication) oder in einem externen Netzwerkknoten, das sogenannte ESN (External Service Node). Die Einführung des Split-SET Servers ermöglicht die Teilung der SET™-Software zwischen dieser Einheit und der mobilen Station MS. Die Verwaltung der Software, insbesondere der Schlüssel wird mit den zur Verfügung stehenden Speichervorrichtungen erreicht. Gemäß Figur 5 erfolgt das Lokalisieren der privaten Schlüssel des Benutzers, in Figur 5 als MS(PS) bezeichnet, in der mobilen Station MS. Die Verwaltung der restlichen Schlüssel, beispielsweise des öffentlichen Schlüssels, in Figur 5 als MS(OS) bezeichnet, oder der Zertifikate, wird in der Speichervorrichtung des Split-SET Servers gemacht. Die Kommunikation des Split-SET Servers mit einem Händler erfolgt durch das Internet. Der Händler bietet seine Ware oder Dienste über einen WWW-Server an. Die WWW-Seiten geben Informationen beziehungsweise genaue Beschreibungen über die anzubietende Produktpalette. Jeder Benutzer, der diese Seite aufruft erhält die gleichen Informationen, auch bezüglich des bargeldlosen Zahlungsverkehrs. Alle mögliche Ausprägungen des Zahlungsobjekts werden dabei berücksichtigt. Ein Zahlungsobjekt kann entweder einen bestimmten Geldwert, beispielsweise anonymes oder digitales Bargeld repräsentieren oder Informationen zum Bankkonto des Kunden enthalten, beispielsweise Einzugsermächtigung.

Von dem Händler verläuft die Verbindung weiterhin über Internet zu einem Finanzinstitut des Händlers. Das Finanzinstitut des Händlers wickelt alle Geldtransaktionen des Händlers ab, beispielsweise die Abrechnung des Händlers mit der Bank des Kunden. Der Übersicht halber sind in der Figur 5 nicht alle in eine Verbindung über das GSM und Internet involvierte Einrichtungen detailliert ausgeführt. Die Figur 5 enthält die Authentizierungsinstanz, die für das Finanzinstitut des Händlers die Überprüfung des Benutzers vornimmt.

Der untere Teil der Figur 5 stellt logisch das Heranziehen der unterschiedlichen Protokollen zwischen den jeweiligen Kommunikationseinheiten dar. Die Einführung des Split-SET Servers ermöglicht die Teilung der SET™-Software zwischen dieser Einheit und der mobilen Station. Wobei die privaten Schlüssel bleiben in der mobilen Station erhalten. Der öffentliche Schlüssel und die Zertifikate werden in den Split-SET Server verschoben. Auf diese Weise wird erreicht, daß der Signaturprozess von der mobilen Station MS kontrolliert wird und im Gegensatz dazu die Realisierung der restlichen Verfahren, wie zum Beispiel die Initialisierung der Bezahlung der Kontrolle des Split-SET Servers unterliegt. Die Kommunikation zwischen dem Split-SET Server und dem Händler so wie zwischen dem Händler und seinem Finanzinstitut basiert vollständig auf dem bereits existierenden SET™ Protokoll.

Aus Sicherheitsgründen ist es wichtig, daß nicht jede Einheit, die in einem Zahlungssystem integriert ist über alle vorhandene Schlüssel verfügt. Dies wird gewährleistet einerseits durch die Verteilung der Benutzerschlüssel zwischen seiner mobilen Station und dem Split-SET Server und anderseits werden zusätzliche Mechanismen während der Abwicklung der, mit SET™ Protokoll verbundenen Prozeduren herangezogen. Beispielsweise werden bei Zahlungen nach SET™ mit der Bestellung auch verschlüsselte Kreditkarteninformationen an den Händler übertragen, die dieser jedoch nicht lesen soll, sondern nur überprüft an eine Authentizierungsinstanz weiterzuleiten hat. Um den Händler trotz der unsichtbaren Zahlungsanweisung Sicherheit zu geben, daß diese zu der getätigten Bestellungsvorgang gehört und gleichzeitig um den Kunden vor Missbrauch zu schützen, verwendet SET™ an dieser Stelle die Dualsignatur. Hiermit wird erreicht, daß Bestellung und Zahlungsanweisungen eindeutig einander zuzuordnen sind, ohne daß der Händler die Zahlungsanweisungen beziehungsweise die Authentizierungsinstanz die Bestellung einsehen kann.

Im folgenden wird die Erfindung anhand des Patentanspruches 19 näher erläutert.

Gemäß Patentanspruches 19 wird eine elektronische Transaktion zwischen einer mobilen Station und einer Netzwerkvorrichtung in einem offenen Netz mit Verwendung eines Protokolls zur Durchführung von sicheren elektronischen Transaktionen realisiert. In eine elektronische Transaktion wird eine mobile Station, eine Netzwerkvorrichtung und eine weitere Vorrichtung, die zwischen den beiden Einheiten lokalisiert ist, involviert. Das Durchführen der Transaktion zwischen der mobilen Station und der Netzwerkvorrichtung erfolgt mit Verwendung eines Protokolls zur Durchführung von sicheren elektronischen Transaktionen, in dem dieses Protokoll in einen ersten und einen weiteren Teil aufgeteilt wird. Der erste Teil des Protokolls wird der mobilen Station zugewiesen und dient der Kontrolle der Durchführung der elektronischen Transaktion zwischen der mobilen Station und der weiteren Vorrichtung. Aus der mobilen Station wird nämlich eine elektronische Transaktion initiiert und das Ergebnis eines durchgeführten Schrittes, der zur Realisierung einer vollständigen Transaktion beiträgt, wird an die mobile Station zurückgeliefert und dort wird es auch ausgewertet. Auf diese Weise übernimmt die mobile Station die Kontrolle über den Ablauf einer initiierten Transaktion. Die mobile Station übernimmt ebenfalls die Verwaltung der privaten Daten des Benutzers anhand deren ein Signaturprozess durchgeführt wird. Hiermit wird eine Kontrolle über eine durchzuführende Transaktion erzielt.

Der zweite Teil der Software wird in der weiteren Vorrichtung implementiert. Mit diesem Schritt übernimmt diese die Steuerung der Durchführung der in der mobilen Station initiierten Transaktion zwischen dieser Einheit und der Netzwerkvorrichtung. Die weitere Vorrichtung verfügt über die öffentlichen Daten eines Benutzers also die restlichen Daten die notwendig sind, um eine Transaktion durchzuführen, die aber nicht in der mobilen Station enthalten sind. Nach dem Empfang einer initialisierenden Nachricht aus der mobilen Station übernimmt die weitere Vorrichtung die Vervollständigung der elektronischen Transaktion, in dem die notwendigen Signalisierungsnachrichten zu den entsprechenden Einheiten verschickt werden. Auf diese Weise wird die Steuerung der elektronischen Transaktionen erzielt.

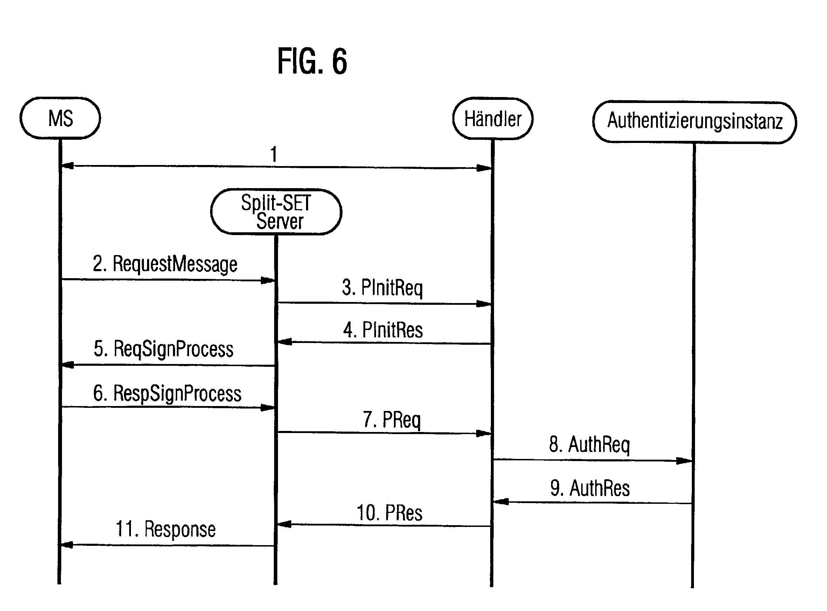

Die genauen Abläufe mit dem erforderlichen Nachrichtenaustausch werden im folgenden anhand eines Ausführungsbeispiels und der Figur 6 näher erläutert. Zu diesem Zweck wird der Vorgang der Zahlungstransaktion herangezogen. Der Erwerb von Waren erfordert nämlich eine Vielzahl an Transaktionen. Die wichtigste und gleichzeitig die kritischste ist jedoch die Zahlungstransaktion.

Figur 6 stellt schematisch eine Kommunikation zwischen einem mobilen Teilnehmer einem Händler und einer Authentizierungsinstanz dar. Der zeitliche Ablauf ist durch die aufsteigende Reihenfolge der Nummerierung der erforderlichen Schritten gekennzeichnet.

Im Schritt 1 ist schematisch beispielhaft die Phase des Einkaufs dargestellt. Nach Beendung dieser Phase sendet die mobile Station eine Nachricht, die in Figur 6 mit RequestMessage gekennzeichnet ist, an den Split-SET Server, um somit die Initialisierung der Transaktionen zu deuten, Schritt 2. Der Erhalt dieser Nachricht bedeutet für den Split-SET Server die Versendung der Initialisierungsnachricht an den Händler, Schritt 3, die der Händler mit einer unterschriebenen Nachricht PInitRes, beantwortet, Schritt 4. Diese Antwort enthält das Signatur-Zertifikat des Händlers. In der nächsten Phase wird die Zahlungsanweisung durchgeführt. Dies erfordert die Authentizierung des Benutzers vor dem Zahlungssystem mit einer Dualsignatur. Wie bereits erwähnt erfolgt die Erstellung dieser Signatur unter dem Einsatz des privaten Schlüssels des Benutzers. Aus diesem Grund sendet der Split-SET Server im Schritt 5 die Nachricht ReqSignProcess an die mobile Station. Die mobile Station unterzeichnet die erhaltene Nachricht mit dem eigenen privaten Schlüssel und sendet sie wieder an den Split-SET Server mit der Nachricht RespSignProcess zurück, Schritt 6.

Der Split-SET Server entnimmt aus dieser Nachricht die Signatur der mobilen Station und mit deren Hilfe bildet dieser die Zahlungsanforderungsnachricht, die sogenannte PReq (Purchase Request) Nachricht, die an das Zahlungssystem verschickt wird. Diese Nachricht enthält die Bestellungsinformationen, die an den Händler verschickt werden und die Zahlungsinformationen, die an die Authentizierungsinstanz transparent durch den Händler weitergeleitet werden. Die Bestellungsinformation, die in dieser Phase verwendet wird, entspricht dem Fingerabdruck der bereits getätigten Bestellung. Die vollständige Beschreibung der getätigten Bestellung, beispielsweise die Anzahl der bestellten Produkte oder ihre Form, wird während der Bestellungsphase erstellt und nach der Beendigung der Bestellungsphase wird aus der vollständigen Beschreibung ein Fingerabdruck erzeugt und dieser während der Zahlungsphase als Bestellungsinformation verwendet.

Die Bestellung und Zahlungsinformationen werden an die relevanten Einrichtungen im System verschlüsselt übertragen. Die Verschlüsselung dieser Nachrichten erfolgt unter dem Einsatz der Doppelunterschrift. Zu diesem Zweck werden aus der Bestellung und Zahlungsinformationen zwei Fingerabdrücke gebildet, die folglich aneinander angehängt werden, um aus dieser Nachricht wieder ein Fingerabdruck zu erstellen, der unter dem Einsatz der privaten Schlüssel der mobilen Station zu einer Doppelunterschrift kodiert wird.

Die Zahlungsanweisung wird unter der Verwendung der symmetrischen Verschlüsselung kodiert. Aus diesem Grund generiert der Split-SET Server mit einem Zufallsgenerator einen symmetrischen Schlüssel. Mit diesem Schlüssel wird die Zahlungsanweisung verschlüsselt. Auf separater Basis, beispielsweise während einer Registrierung werden die Kreditkarteninformationen und der generierter symmetrischer Schlüssel unter dem Einsatz des öffentlichen Schlüssels der Authentizierungsinstanz, der mit der Nachricht PInitRes zugesendet wurde, verschlüsselt. Auf diese Weise wird sichergestellt, daß die Kreditkarteninformationen bei dem Händler transparent an die Authentizierungsinstanz weitergeleitet werden ohne ihm die Möglichkeit des Informationszugangs zu gewähren.

Die verschlüsselten Bestellungsinformationen, Zahlungsinformationen, Kreditkarteninformationen und zusätzlich die Doppelunterschrift werden mit der PReq Nachricht, Schritt 7 an den Händler verschickt. Dieser verifiziert aus den empfangenen Informationen den Kunden und die Zugehörigkeit der Bestellung. Zu diesem Zweck verwendet der Händler die Doppelunterschrift. Zuerst wird der eigene Fingerabdruck aus der Bestellungsinformation erstellt. Aus der empfangenen Doppelunterschrift entnimmt der Händler nach der Anwendung des öffentlichen Schlüssels den Fingerabdruck der Zahlungsinformation. Als nächstes verknüpft der Händler die beiden Fingerabdrücke und vergleicht sie mit der aus der Doppelunterschrift entschlüsselter Verkettung dieser zwei Fingerabdrücke. Mit diesem Verfahren erlangt der Händler die Gewißheit, daß die empfangene Nachricht tatsächlich von dem Kunde stammt und, daß die bereits getätigte Bestellung und die durchführende Zahlungsprozedur zueinander korrespondieren. Die Kreditkarteninformationen werden von dem Händler an die Authentizierungsinstanz transparent weitergeleitet. Im nächsten Schritt initiiert der Händler eine Autorisierung der Zahlung gegenüber der Authentizierungsinstanz. Mit dieser Operation wird erstens die Zahlungsfähigkeit des Kreditinhabers verifiziert und bei vorhandener Zahlungsfähigkeit wird Erlaubnis zu der Abbuchung freigegeben. Dies erfolgt gemäß Figur 6 im Schritt 8 durch die Versendung der Authentizierungsnachricht AuthReq. Diese Nachricht enthält sowohl die Anfrage des Händlers bezüglich der Akzeptanz der Zahlungsanweisung des Kunden, so wie die von dem Kunden stammende und verschlüsselte Zahlungsanweisung. Die Anfrage des Händlers wird ebenfalls unter Einsatz eines symmetrischen Verfahrens verschlüsselt. Der symmetrische Schlüssel wird nach Anwendung eines asymmetrischen Kodierungsverfahrens an die Authentizierungsinstanz gesendet. Die Anfrage enthält unter anderem den Fingerabdruck der Bestellung. Der Händler ermittelt aus der vollständigen Beschreibung der Bestellung den Fingerabdruck und versendet dies zusammen mit der Doppelunterschrift des Kunden und der Zahlungsanweisung an die Authentizierungsinstanz. Die Authentizierungsinstanz entschlüsselt mit dem privaten Schlüssel die Zahlungsanweisung. Um das Verifizieren der Zustimmigkeit des Händlers und den Kunden bezüglich der erfolgten Bestellung durchzuführen, wird aus der Zahlungsanweisung ein Fingerabdruck gebildet, dieser folglich an den erhaltenen Fingerabdruck der Bestellungsanweisung angehängt, um aus dieser Verkettung eine Doppelunterschrift zu bilden und diese mit der empfangenen Doppelunterschrift zu vergleichen. Auf diese Weise erfolgt die Sicherstellung, daß die Beschreibung der Bestellung des Kunden und des Händlers übereinstimmen.

Nach erfolgreich durchgeführtem Verifizieren der Bestellung wird im folgenden die Authentizierung der Zahlungsanweisung des Kunden durchgeführt. Zu diesem Zweck werden die kreditkarte-bezogene Informationen aus der Zahlungsanweisung des Kunden entnommen und mittels des zugrundeliegenden Banknetzwerks wird die Kundenbank abgefragt. Die Ergebnisse der Autorisierung werden in eine Nachricht AuthRes verpackt, verschlüsselt und an den Händler geschickt, Schritt 9. Diese Daten wurden bei der Authentizierungsinstanz mit einem symmetrischen Schlüssel verschlüsselt, der an den Händler übergeben wird, nach dem dieser mit einem asymmetrischen Schlüssel, das heißt mit dem öffentlichen Schlüssel des Händlers verschlüsselt wurde. Der Händler verwendet seinen privaten Schlüssel, um den symmetrischen Schlüssel zu entschlüsseln, um die empfangene Nachricht AuthRes zu dekodieren.

Diese Daten werden nach ihrem Verifizieren im Schritt 10 an den Split-SET Server verschlüsselt gesendet. Dieser führt ebenfalls die notwendigen Verifikationsoperationen durch und im Schritt 11 werden diese Daten an die mobile Station mit der Nachricht Response geschickt.

Gemäß Patentanspruch 24 und 26 wird die Erfindung mit Einsatz einer Vorrichtung in einer mobilen Station realisiert. Diese Vorrichtung (ohne Figur) enthält Mittel zur Abspeicherung des ersten Teils des Protokolls, der zur Verwaltung privater Daten eines Teilnehmers in der mobilen Station eingesetzt wird. Eine Initiierung einer elektronischen Transaktion wird in der mobilen Station durchgeführt mit Mitteln zur Initiierung einer elektronischen Transaktion in einer mobilen Station. Das Versenden einer in der mobilen Station erstellten Nachricht erfolgt mit Einsatz von Mitteln zum Versenden von Daten. Die Kontrolle der initiierten elektronischen Transaktion erfolgt mit Mitteln zur Kontrolle einer elektronischen Transaktion zwischen der mobilen Station und der weiteren Vorrichtung. Die Mittel zum Empfangen von Daten in der mobilen Station dienen dem Empfang von Nachrichten, die das Resultat der durchgeführten elektronischen Transaktion enthalten.

Eine elektronische Transaktion wird von der mobilen Station aus zu einer Vorrichtung, die zwischen einer mobilen Station und einer Netzwerkvorrichtung plaziert ist, durchgeführt. Diese Vorrichtung enthält Mitteln zur Abspeicherung des weiteren Teils des Protokolls und Mitteln zur Verwaltung von öffentlich zugänglichen Daten eines Teilnehmers. Das Versenden von Daten erfolgt sowohl zu der mobilen Station als auch zu der Netzwerkvorrichtung und wird erzielt mit Einsatz von Mitteln zum Versenden von Daten. Der mobilen Station werden die Ergebnisse einer durchgeführten Transaktion und der Netzwerkvorrichtung die Nachrichten, die mit der Durchführung eines Bestellung- und Zahlungsvorgangs zusammenhängen mitgeteilt. Diese Vorrichtung ist für die Steuerung eines Vorganges mit der Netzwerkvorrichtung zuständig. Dies wird mit den Mitteln zur Steuerung der elektronischen Transaktion, zwischen der Vorrichtung und der Netzwerkvorrichtung erreicht. Der Empfang einer Nachricht von der Netzwerkvorrichtung erfolgt mit Mitteln zum Empfangen von Daten.

## Patentansprüche

1. Kommunikationssystem zu Durchführung von elektronischen Transaktionen zwischen einer mobilen Station (MS) in einem mobilen Kommunikationsnetzwerk (MN) und einer Netzwerkvorrichtung (NV) in einem offenen Netz (ON),
mit einer weiteren Vorrichtung (WV) zwischen der mobilen Station und der Netzwerkvorrichtung und
mit einem Protokoll (PT) zur Durchführung von sicheren elektronischen Transaktionen, das in einen ersten Teil (PT1) zur Kontrolle privater Daten eines Teilnehmers und
in einen weiteren Teil (PT2) aufgeteilt ist,
bei dem der erste Teil (PT1) in der mobilen Station (MS) und der weitere Teil (PT2) in der weiteren Vorrichtung (WV) implementiert ist und bei dem eine elektronische Transaktion von der mobilen Station über die weitere Vorrichtung zur Netzwerkvorrichtung ausgeführt wird.

2. Kommunikationssystem nach Anspruch 1 bei dem die mobile Station (MS) die Verwaltung eines privaten Schlüssels eines mobilen Teilnehmers erhält.

3. Kommunikationssystem nach Anspruch 1 oder 2 bei dem die weitere Vorrichtung (WV) die Verwaltung von Zertifikaten und von öffentlichen Schlüsseln übernimmt.

4. Kommunikationssystem nach einem der Ansprüche 1 bis 3 bei dem die Durchführung eines Signaturprozesses des mobilen Teilnehmers in der mobilen Station vorgenommen wird.

5. Kommunikationssystem nach einem der Ansprüche 1 bis 4 bei dem die weitere Vorrichtung (WV) eine Steuerung über den gesamten Vorgang der elektronischen Transaktionen vornimmt.

6. Kommunikationssystem nach einem der Ansprüche 1, 3 oder 5 bei dem die weitere Vorrichtung (WV) entweder in einem mobilen Netz oder in einem externen Netzwerkknoten eingebracht ist.

7. Kommunikationssystem nach einem der Ansprüche 1, 2 oder 4 bei dem die mobile Station eine Funktion eines Personal Computers und eine Funktion eines mobilen Telefons, das eine Kommunikation mit einem mobilen Kommunikationsnetz erfüllt aufweist.

8. Kommunikationssystem nach einem der Ansprüche 1 bis 7 bei dem elektronische Transaktionen durch den Austausch von Signalisierungsinformationen realisiert werden.

9. Kommunikationssystem nach einem der Ansprüche 1 bis 8 bei dem eine Bestellung und eine Zahlungsanweisung zu den elektronischen Transaktionen gehören.

10. Kommunikationssystem nach einem der Ansprüche 8 bis 10 bei dem die Signalisierungsinformationen verschlüsselt übertragen werden.

11. Kommunikationssystem nach Anspruch 10 bei dem zur Verschlüsselung und Entschlüsselung der Signalisierungsinformationen eine asymmetrische und symmetrische Verschlüsselungsmethode eingesetzt wird.

12. Kommunikationssystem nach Anspruch 11 bei dem in einem Verschlüsselungsverfahren benutzten Schlüsseln entweder gleich sind oder derart in einer Relation zueinander stehen, daß eine mit einem Schlüssel verschlüsselte Nachricht mit dem anderen wieder entschlüsselt wird.

13. Kommunikationssystem nach Anspruch 10 bis 12 bei dem die Schlüssel entweder ein symmetrischer Schlüssel oder ein privater und ein öffentlicher Schlüssel ist.

14. Kommunikationssystem nach einem der Ansprüche 4 bis 12 bei dem der Signaturprozess mit der Durchführung einer Authentizierung erfolgt, die auf einem asymmetrischen Verschlüsselungsverfahren basiert.

15. Kommunikationssystem nach einem der Ansprüche 4 bis 13 bei dem, bei dem Signaturprozess eine Nachricht von der weiteren Vorrichtung an die mobile Station versendet wird, die die empfangene Nachricht mit dem eigenen privaten Schlüssel unterzeichnet und an den Server schickt, um dem Server die Signatur der mobilen Station mitzuteilen.

16. Kommunikationssystem nach einem der Ansprüche 1 bis 14 bei dem die elektronischen Transaktionen durch Einsatz von elektronischen Transaktionsprotokollen realisiert werden.

17. Kommunikationssystem nach Anspruch 15 bei dem die Transaktionsprotokolle Cyber-Cash, First Virtual oder Secure Electronic Transaktion™ (SET™) ist.

18. Kommunikationssystem nach Anspruch 1 bei dem das mobile Netz ein Global System for Mobile Communication (GSM), General Packet Radio Service (GPRS), Universal Mobile Telecommunication System (UMTS) Netz ist.

19. Verfahren zu Durchführung von elektronischen Transaktionen zwischen einer mobilen Station (MS) in einem mobilen Kommunikationsnetzwerk (MN) und einer Netzwerkvorrichtung (NV) in einem offenen Netz (ON) und
einer weiteren Vorrichtung (WV) zwischen der mobilen Station und der Netzwerkvorrichtung und
mit einem Protokoll (PT) zur Durchführung von sicheren elektronischen Transaktionen, bei dem
das Protokoll in einen ersten Teil (PT1) zur Kontrolle privater Daten eines Teilnehmers und in einen weiteren Teil (PT2) aufgeteilt wird, bei dem
eine Transaktion von der mobilen Station (MS) aus zu einer weiteren Vorrichtung (WV) mit dem ersten Teil (PT1) kontrolliert wird und bei dem
mit dem zweiten Teil (PT2), der in der weiteren Vorrichtung (WV) enthalten ist, die Transaktion zu der Netzwerkvorrichtung (NV) in dem offenen Netz (ON) gesteuert wird.

20. Verfahren nach Anspruch 18 bei dem die privaten Daten ein privater Schlüssel eines Teilnehmers ist.

21. Verfahren nach Anspruch 18 bei dem der zweite Teil der Software öffentliche Daten des Teilnehmers enthält

22. Verfahren nach Anspruch 20 bei dem die öffentlichen Daten ein öffentlicher Schlüssel des Teilnehmers und mindestens ein Zertifikat ist.

23. Verfahren nach einem der Ansprüche 18 bis 21 bei dem ein Signaturprozess aus der mobilen Vorrichtung mit einer Versendung einer initialisierenden Signalisierungsnachricht (Request_Message) eingeleitet wird und die Beendung der Initiierungsphase mit einer das Ergebnis tragenden Signalisierungsnachricht (RequestSignProcess) der mobilen Vorrichtung mitgeteilt wird und bei dem nach erfolgreicher Durchführung des Signaturprozesses ein Zahlungsvorgang der weiteren Vorrichtung durch Versendung einer Nachricht (ResponseSignProcess) initiiert wird und das Ergebnis des durchgeführten Zahlungsganges mit einer Nachricht (Response) der mobilen Vorrichtung mitgeteilt wird.

24. Vorrichtung in einer mobilen Station zu Durchführung eines Verfahrens nach Anspruch 18 mit
- Mitteln zur Abspeicherung des ersten Teils zur Verwaltung privater Daten eines Teilnehmers in der mobilen Station,
- Mitteln zum Versenden von Daten,
- Mitteln zur Initiierung einer elektronischen Transaktion in einer mobilen Station,
- Mitteln zur Kontrolle einer elektronischen Transaktion zwischen der mobilen Station und der weiteren Vorrichtung, und
- Mitteln zum Empfangen von Daten.

25. Vorrichtung nach Anspruch 23 mit
Mitteln zur Durchführung eines Signaturprozesses.

26. Vorrichtung zwischen einer mobilen Station und einer Netzwerkvorrichtung zu Durchführung eines Verfahrens nach Anspruch 18 mit
- Mitteln zur Abspeicherung eines weiteren Teils
- Mitteln zum Versenden von Daten,
- Mitteln zur Verwaltung von öffentlich zugänglichen Daten eines Teilnehmers,
- Mitteln zum Steuern der elektronischen Transaktion, zwischen der Vorrichtung und der Netzwerkvorrichtung und
- Mitteln zum Empfangen von Daten.
